# EUROPEAN PATENT APPLICATION

(11) **EP 3 579 626 A1**
(43) Date of publication of application: **11.12.2019**
(21) Application number: 17902458.3
(22) Date of filing: 20.03.2017
(51) Int. Cl.: H04W 68/02

(54) **PAGING METHOD AND RELEVANT DEVICE**

(71) Applicant: Huawei Technologies Co., Ltd., Longgang District Shenzhen, Guangdong 518129 (CN)
(72) Inventor: CHONG, Weiwei, Shenzhen Guangdong 518129 (CN); WU, Xiaobo, Shenzhen Guangdong 518129 (CN); XIN, Yang, Shenzhen Guangdong 518129 (CN)
(74) Representative: Gill Jennings & Every LLP
(86) International application number: PCT/CN2017/077380
(87) International publication number: WO 2018/170700

(57) **Abstract**

Embodiments of this application provide a paging method and a related device. The method includes: obtaining, by an access and mobility management network element, a paging area of a terminal, determined by a network data analytics network element, where the paging area is smaller than a registration area of the terminal; receiving, by the access and mobility management network element, a downlink data notification sent by a session management network element, where the downlink data notification is used to notify that there is downlink data to be sent to the terminal; and sending, by the access and mobility management network element, a paging message to the terminal in idle mode within the paging area. According to the embodiments of this application, a paging range is reduced, and further signaling overheads and occupation of air interface resources are reduced.

## Description

### TECHNICAL FIELD

This application relates to the field of wireless communications technologies, and in particular, to a paging method and a related device.

### BACKGROUND

In a long term evolution (Long Term Evolution, LTE) network of the 4th generation mobile communications technology (4th Generation, 4G), after user equipment (User Equipment, UE) request to register with a network, a mobility management entity (Mobility Management Entity, MME) of the network allocates a tracking area list (Tracking Area list, TA list) to each UE. The TA list includes a plurality of TAs, and the TA list is a registration area of the UE in the network, and is used to record a moving range of the UE after the UE registers with the network. After the UE receives the TA list, allocated by the MME, included in a registration accept message, the UE does not need to initiate a registration update request if the UE does not move outside a paging range of the TA list; and the UE re-requests to register with the network if the UE moves outside the range of the TA list, and a network side allocates a new TA list to the UE. In addition, when the UE is in idle mode and the network side needs to page the UE, the network side pages the UE within the range of the recorded TA list. To be specific, the network side sets a paging range of the UE to a registration area, and pages the UE within the registration area. Specifically, this can be implemented by using the MME to page all cells served by all base stations within the range of the TA list.

However, excessive air interface resources need to be consumed by using a prior-art paging method, easily causing air interface congestion.

### SUMMARY

This application provides a paging method and a related device, to resolve a problem that air interface congestion is easily caused because excessive air interface resources need to be consumed in an existing technical solution.

According to a first aspect, an embodiment of this application provides a paging method. The method includes: first, obtaining, by an access and mobility management network element, a paging area of a terminal, determined by a network data analytics network element, where the paging area is smaller than a registration area of the terminal; then, receiving a downlink data notification sent by a session management network element, where the downlink data notification is used to notify that there is downlink data to be sent to the terminal; and finally, sending a paging message to the terminal in idle mode within the paging area. A paging request is sent within the paging area, thereby reducing a paging range, and further reducing signaling overheads and occupation of air interface resources.

In another possible design, after the access and mobility management network element sends the paging message to the terminal in idle mode within the paging area, if determining that the terminal is not reached through paging within the paging area, the access and mobility management network element pages the terminal within the registration area of the terminal. According to this design, when the paging range that is used for the first time is incorrect, an actual paging range may be extended to the registration area, to ensure that the terminal can be reached through paging.

In another possible design, the access and mobility management network element may obtain an activation condition of the paging area; and when the activation condition is met, the access and mobility management network element sends the paging message to the terminal in idle mode within the paging area. Therefore, the access and mobility management network element may use different paging areas for different terminals or a same terminal in different scenarios based on service types, time periods, locations, and the like, to adaptively determine the paging range, and further keep a balance between a one-paging hit ratio and the paging range, so as to obtain a highest paging hit ratio in a minimum range.

In another possible design, the activation condition includes at least one of a time condition, a location condition, and a service condition. Specifically, the access and mobility management network element may determine to activate a specific paging area or some paging areas based on a current time, information about a network location of the terminal, information about a service currently used by the terminal, or the like.

In another possible design, the paging area includes at least one of a cell (Cell) list and an access network device list. The cell list is a set of one or more cell ranges. Specifically, cells may be distinguished from each other by using cell identities. The access network device list is a set of areas managed by one or more access network devices. Specifically, the access network devices may be distinguished from each other by using identities of the access network devices.

In another possible design, the registration area includes a tracking area (TA, Tracking Area) list. The tracking area list is a set of one or more tracking area ranges. Specifically, the tracking areas may be distinguished from each other by using identities of the tracking areas.

In another possible design, the access and mobility management network element determines the access network device list based on the paging area, and sends a paging request to each access network device included in the access network device list, where the paging request includes a first cell list or a second cell list, the first cell list includes all cells within the paging area, and the second cell list is included in the first cell list and is managed by a corresponding access network device.

In another possible design, the access and mobility management network element determines the access network device list based on the registration area, and sends the paging request to each access network device included in the access network device list, where the paging request includes the first cell list.

In another possible design, the access and mobility management network element first receives a registration message sent by the terminal, then sends a request message to the network data analytics network element, and finally receives a response message returned by the network data analytics network element, where the response message includes the paging area. In this design, there may be a direct interface between the access and mobility management network element and the network data analytics network element, and the access and mobility management network element may send the request message and receive the response message through the direct interface. Alternatively, there may be no direct interface between the access and mobility management network element and the network data analytics network element, and the access and mobility management network element may send the request message and receive the response message through another network element device.

In another possible design, the response message further includes the registration area.

In another possible design, the access and mobility management network element generates the registration area for the terminal.

In another possible design, after the access and mobility management network element sends the paging message to the terminal in idle mode within the paging area, the access and mobility management network element determines whether the paging area is correct; and
if determining that the paging area is incorrect, the access and mobility management network element disables the paging area, to avoid paging the terminal still in the incorrect paging area, thereby reducing time spent on paging; or the access and mobility management network element updates the paging area to use a new paging area to preferably page the terminal, thereby ensuring paging accuracy of the paging area.

In another possible design, that the access and mobility management network element determines whether the paging area is correct includes: If the terminal is not reached through paging within the paging area, the access and mobility management network element determines that the paging area is incorrect, or if receiving signaling or data sent by the terminal from an area other than the paging area, the access and mobility management network element determines that the paging area is incorrect.

In another possible design, the access and mobility management network element sends a paging area update request to the network data analytics network element, and after receiving the paging area update request, the network data analytics network element updates the paging area; then the access and mobility management network element receives an updated paging area sent by the network data analytics network element; and finally the access and mobility management network element sends a paging message to the terminal in idle mode within the updated paging area. In this design, there may be a direct interface between the access and mobility management network element and the network data analytics network element, and the access and mobility management network element may send the paging area update request and receive the updated paging area through the direct interface. Alternatively, there may be no direct interface between the access and mobility management network element and the network data analytics network element, and the access and mobility management network element may send the paging area update request and receive the updated paging area through another network element device.

In another possible design, when the access and mobility management network element sends the paging area update request to the network data analytics network element, the access and mobility management network element further sends, to the network data analytics network element, information indicating that the paging area is incorrect, where the indication information is used to indicate that the obtained paging area is incorrect.

In another possible design, when the access and mobility management network element sends the paging area update request to the network data analytics network element, the access and mobility management network element further sends, to the network data analytics network element, a cause value for requesting to update the paging area, where the cause value is used to indicate a specific cause for requesting to update the paging area.

In another possible design, when the access and mobility management network element receives the updated paging area sent by the network data analytics network element, the access and mobility management network element further receives an updated registration area sent by the network data analytics network element.

In another possible design, if the access and mobility management network element further receives the updated registration area sent by the network data analytics network element, the access and mobility management network element sends a non-access stratum NAS message to the terminal, where the NAS message includes the updated registration area.

According to a second aspect, an embodiment of this application further provides a paging method. The method includes: determining, by a network data analytics network element, a paging area of a terminal, where the paging area is smaller than a registration area of the terminal; sending, by the network data analytics network element, the paging area to the access and mobility management network element; and after receiving the paging area, sending, by the access and mobility management network element, a paging message to the terminal in idle mode within the paging area. A paging request is sent within the paging area, thereby reducing a paging range, and further reducing signaling overheads and occupation of air interface resources.

In another possible design, the network data analytics network element determines the paging area of the terminal based on historical data of the terminal and/or current state data of the terminal that are/is collected.

In another possible design, the network data analytics network element may include the network data analytics (Network data analytics, NWDA) function entity, a policy and charging function (Policy and Charging Function, PCF) entity, a network exposure function (Network Exposure Function, NEF) entity, or a structured data storage function (Structured Data Storage Function, S-DSF) entity.

In another possible design, the network data analytics network element sends an activation condition of the paging area to the access and mobility management network element, where the activation condition is used to instruct the access and mobility management network element to send the paging message to the terminal in idle mode within the paging area when the activation condition is met.

In another possible design, the activation condition includes at least one of a time condition, a location condition, and a service condition. Specifically, the network data analytics network element may determine an activation condition of a specific paging area or some paging areas based on a time, information about a network location of the terminal, information about a service used by the terminal, or the like that are collected.

In another possible design, the network data analytics network element receives a request message sent by the access and mobility management network element; and the network data analytics network element sends a response message to the access and mobility management network element, where the response message includes the paging area. In this design, there may be a direct interface between the network data analytics network element and the access and mobility management network element, and the network data analytics network element may receive the request message and send the response message through the direct interface. Alternatively, there may be no direct interface between the network data analytics network element and the access and mobility management network element, and the network data analytics network element may receive the request message and send the response message through another network element device.

In another possible design, the response message further includes the registration area.

In another possible design, the network data analytics network element receives a paging area update request sent by the access and mobility management network element; the network data analytics network element updates the paging area; and the network data analytics network element sends an updated paging area to the access and mobility management network element. In this design, there may be a direct interface between the network data analytics network element and the access and mobility management network element, and the network data analytics network element may receive the paging area update request and send the updated paging area through the direct interface. Alternatively, there may be no direct interface between the network data analytics network element and the access and mobility management network element, and the network data analytics network element may receive the paging area update request and send the updated paging area through another network element device.

In another possible design, when the network data analytics network element receives the paging area update request sent by the access and mobility management network element, the network data analytics network element further receives information indicating that the paging area is incorrect, where the indication information is sent by the access and mobility management network element, and is used to indicate that the paging area having been obtained by the access and mobility management network element is incorrect.

In another possible design, when the network data analytics network element receives the paging area update request sent by the access and mobility management network element, the network data analytics network element further receives a cause value for requesting to update the paging area, where the cause value is sent by the access and mobility management network element, and is used to indicate a specific cause for requesting to update the paging area. The network data analytics network element updates the paging area based on the specific cause value.

In another possible design, the network data analytics network element further updates the registration area; and when sending the updated paging area to the access and mobility management network element, the network data analytics network element further sends an updated registration area to the access and mobility management network element.

According to a third aspect, an embodiment of this application provides a paging method. The method includes: receiving, by an access network device, a paging request sent by an access and mobility management network element, where the paging request includes a paging area, and the paging area is smaller than a registration area of a terminal; and sending, by the access network device, a paging message to the terminal in idle mode within the paging area. A paging request is sent within the paging area, thereby reducing a paging range, and further reducing signaling overheads and occupation of air interface resources.

In another possible design, the access network device sends the paging message to the terminal within an intersection cell shared by the paging area and a cell included by the access network device.

According to a fourth aspect, an embodiment of this application provides an access and mobility management network element, including a processor, a memory, and a communications interface. The access and mobility management network element is configured to implement steps in the paging method provided in the first aspect.

According to a fifth aspect, an embodiment of this application provides a network data analytics network element, including a processor, a memory, and a communications interface. The network data analytics network element is configured to implement steps in the paging method provided in the second aspect.

According to a sixth aspect, an embodiment of this application provides an access network device, including a processor, a memory, and a transceiver. The access network device is configured to implement steps in the paging method provided in the third aspect.

According to a seventh aspect, an embodiment of this application provides a paging system, including an access and mobility management network element, a network data analytics network element, and an access network device. The access and mobility management network element is configured to: obtain a paging area of a terminal, determined by the network data analytics network element, where the paging area is smaller than a registration area of the terminal; receive a downlink data notification sent by a session management network element, where the downlink data notification is used to notify that there is downlink data to be sent to the terminal; and send a paging message to the terminal in idle mode within the paging area. The network data analytics network element is configured to determine the paging area of the terminal, where the paging area is smaller than the registration area of the terminal; send the paging area to the access and mobility management network element, where the paging area is used by the access and mobility management network element to send the paging message to the terminal in idle mode within the paging area. The access network device is configured to: receive a sent paging request, where the paging request includes the paging area; and send the paging message to the terminal in idle mode within the paging area.

### BRIEF DESCRIPTION OF DRAWINGS

To describe the technical solutions in embodiments of this application or in the background more clearly, the following briefly describes the accompanying drawings required for describing the embodiments of this application or the background.
FIG. 1 is a schematic architectural diagram of a paging system according to an embodiment of this application;
FIG. 2A and FIG. 2B are a schematic flowchart of a paging method according to an embodiment of this application;
FIG. 3 is a schematic structural diagram of a paging apparatus according to another embodiment of this application;
FIG. 4 is a schematic structural diagram of a paging apparatus according to another embodiment of this application;
FIG. 5 is a schematic structural diagram of a paging apparatus according to another embodiment of this application;
FIG. 6 is a schematic structural diagram of an access and mobility management network element according to another embodiment of this application;
FIG. 7 is a schematic structural diagram of a network data analytics network element according to another embodiment of this application; and
FIG. 8 is a schematic structural diagram of an access network device according to another embodiment of this application.

### DESCRIPTION OF EMBODIMENTS

The following describes the embodiments of this application with reference to the accompanying drawings in the embodiments of this application.

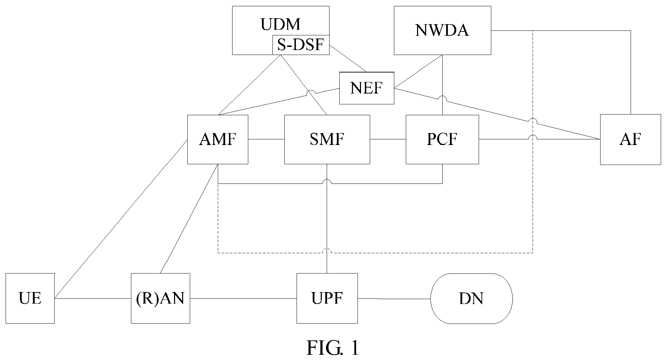

FIG. 1 is a schematic architectural diagram of a paging system according to an embodiment of this application. The paging system mainly includes an access and mobility management network element (Access Management function, AMF), a network data analytics network element, access network device (Access Network, AN), and a terminal (User Equipment, UE). The network data analytics network element may include a network data analytics (Network Data Analytics, NWDA) function entity, a policy and charging function (Policy and Charging Function, PCF) entity, a network exposure function (Network Exposure Function, NEF) entity, or a structured data storage function (Structured Data Storage Function) entity. The paging system may further include a user plane function (User Plane Function, UPF) entity, a data network (Data Network, DN), a session management function (Session Management Function, SMF) entity, an application function (Application Function, AF) entity, and a user data management (User Data Management, UDM) entity. The structured data storage function S-DSF entity may be included in the user data management UDM entity. There is no direct interface between the AMF and the NWDA while there is an interface between the NWDA and the PCF. The AMF needs to send/receive data to/from the NWDA through the PCF. Certainly, there may be a direct interface between the AMF and the NWDA, the AMF may directly send/receive data to/from the NWDA. For brevity, only necessary functional entity and interface information is shown in the schematic structural diagram. However, the paging system is not limited to include only the foregoing functional entities and interfaces. The schematic structural diagram is example description of this application, and this application is applicable to the schematic structural diagram and variation structures of the schematic structural diagram.

In an embodiment of this application, if that a paging area is a cell list (cell list) and a registration area is a tracking area list (TA list) are used as an example for description, the AMF obtains the cell list and/or the TA list from the NWDA through the PCF. In another embodiment of this application, if there is a direct interface between the AMF and the NWDA, the AMF may directly obtain the cell list and/or the TA list from the NWDA. In another embodiment of this application, if the PCF is deployed with a network data collection and analysis function, the AMF may directly obtain the cell list and/or the TA list from the PCF. In another embodiment of this application, if a network data collection and analysis function is deployed in the S-DSF, the AMF obtains the cell list and/or the TA list from the S-DSF. In another embodiment of this application, if a network data collection and analysis function is deployed in the NEF, and analysis result data is stored in the S-DSF, the AMF may obtain the cell list and/or the TA list from the S-DSF through the NEF. The following uses the following case for description. The AMF obtains the cell list and/or the TA list from the NWDA, and there is no direct interface between the AMF and the NWDA while there is an interface between the NWDA and the PCF. Principles of this application in other scenarios are similar to the principle of the foregoing case, and details are not further described herein.

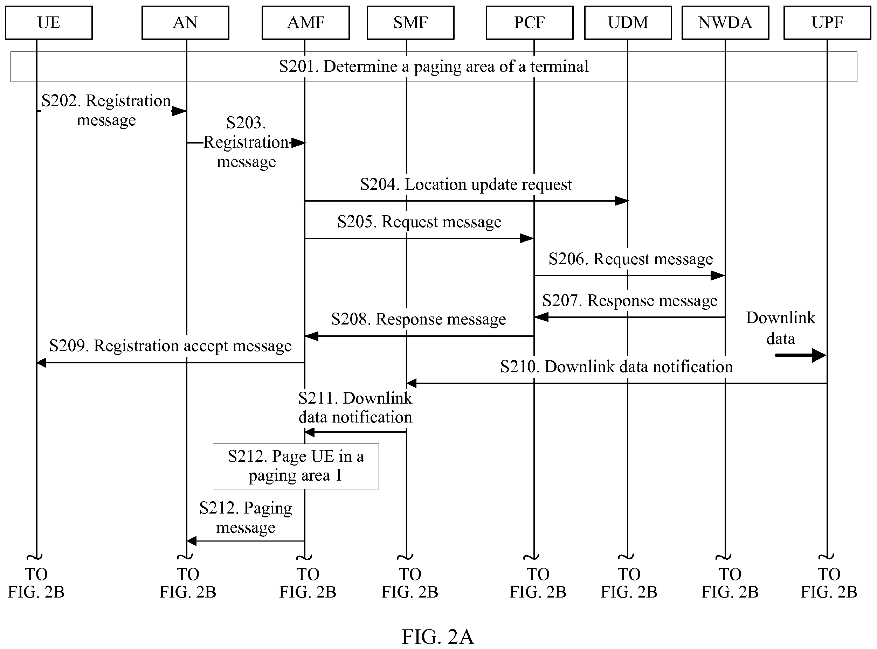

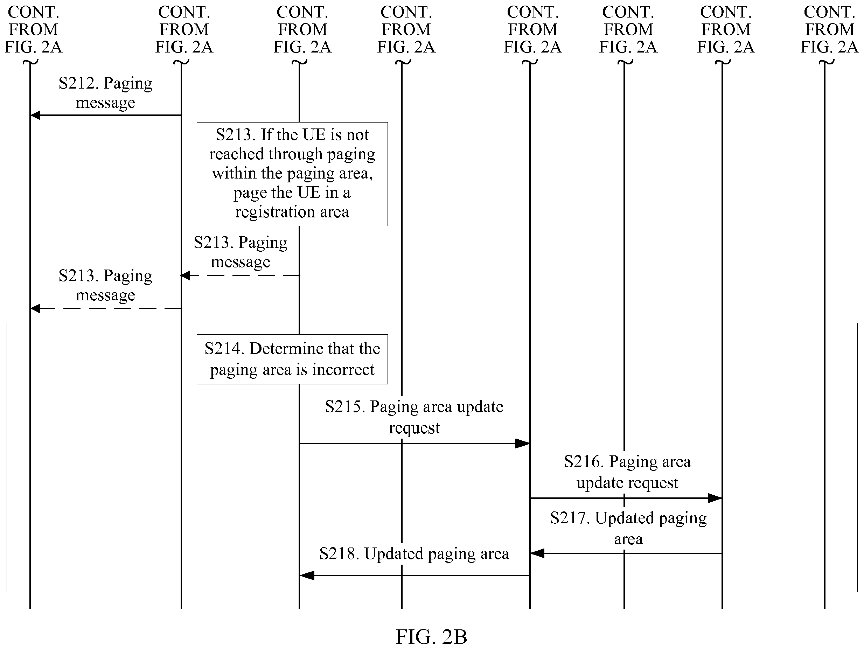

FIG. 2A and FIG. 2B show a paging method according to an embodiment of this application. The method includes but is not limited to the following steps.

S201. An NWDA determines a paging area of a terminal, where the paging area is smaller than a registration area of the terminal.

Optionally, the paging area may include at least one of a cell list (cell list) and an access network device list. The registration area may be a tracking area list (TA list). The TA list is a concept in a 4G network, and the concept may also be used in a 5G network, or the TA list may be another area list of an equivalent concept. The registration area may be generated for the UE by an AMF, or may be generated for the UE by the NWDA, a PCF, an NEF, or an S-DSF.

Optionally, the NWDA collects data (such as time data, location data, and data of a used service) generated during a communication process of the UE, and analyzes behavior habits of a user by using a big data analysis method, to generate a cell list for the UE. The cell list is a set of network cells in which the UE is more probably located. The big data analysis technique used in this embodiment of this application is not related to the solution of this application, and is not specifically limited. The NWDA may generate a plurality of different cell lists for the user by different dimensions (such as a time dimension, a location dimension, a service type dimension), and each cell list is corresponding to one activation condition. When a different activation condition is met, the UE is paged within a cell list corresponding to the activation condition.

Optionally, the NWDA may generate the cell list based on data of the UE collected by the time dimension. Cell lists of the UE may be different in different time periods. For example, if the user works at office during 9:00-17:00 of work days and has a rest at home during 18:00-7:00 of work days, then two corresponding cell lists may be generated by the two time periods. One cell list includes several cells in which the UE moves at office, and a corresponding activation condition is that the time periods 9:00-17:00 of work days start. The other cell list includes several cells in which the UE moves at home, and a corresponding activation condition is that the time periods 18:00-7:00 of work days start. The NWDA may further collect historical service data of the UE, to analyze a corresponding cell list in which the UE is more probably located when the UE uses a service. For example, the user is a user of a specific online game, and usually uses a game service at a specific location (for example, at a studying room at home), and therefore a service cell list may be correspondingly generated for the UE, where the cell list includes a cell in which the studying room at home of the user is located. The cell list is activated only when the UE uses the game service.

S202. The UE sends a registration message to an AN. The registration message is used by the UE to request to register with a 5G network, and the registration message is a non-access stratum (Non-access Stratum, NAS) message.

S203. The AN forwards the registration message to the AMF.

S204. The AMF sends a location update request to a UDM. The location update request is used by the AMF to make the UE register with the UDM, and to request subscription data of the UE.

S205. The AMF sends a request message to the PCF. The request message may be a user context setup request. The request message is used to set up a context for the UE. The request message includes information about a current location of the UE (such as a cell identity ID or other network location information), identification information (such as an international mobile subscriber identity IMSI or a 5G globally unique temporary identity GUTI of UE) of the user, or all or a part of subscription information (such as arestriction area).

S206. The PCF forwards the request message to the NWDA. The request message is used to request the cell list of the user. The request message may include the information about the current location of the UE (such as the cell identity ID or the other network location information), the identification information (such as the international mobile subscriber identity IMSI or the 5G globally unique temporary identity GUTI of the UE) of the user, or the all or the part of subscription information (such as the restriction area) that are received from the AMF.

S207. The NWDA sends a response message to the PCF. The response message may include all cell lists generated for the UE. In addition, the NWDA may further send an activation condition of the cell list to the PCF.

Optionally, the NWDA may determine to activate only a specific cell list or some cell lists based on a current time, the information about the network location of the UE, information about a service currently used by the UE, or the like, and send the activated cell list or the some activated cell lists to the PCF, to page the UE only within the cell list or the some cell lists.

Optionally, the response message further includes a registration area. The registration area may be a TA list. The TA list is also generated by the NWDA for the UE based on daily communication data of the UE, but the TA list has a greater range than the cell list, and includes the cell list. The TA list of the UE is equivalent to a location range of the network with which the UE registers. When the UE moves outside the range of the TA list, the UE needs to re-initiate a registration request to the network. Optionally, to avoid that the UE frequently triggers a re-registration procedure when the UE moves within the cell list, the NWDA needs to consider a generation state of the cell list when generating the TA list, to avoid as far as possible that one cell list is shared by different TA lists.

S208. The PCF forwards the response message to the AMF. The response message may be a context setup response message, and the context setup response message includes the cell list.

Optionally, if the PCF receives the activation condition of the cell list from the NWDA, the context setup response message further includes the activation condition.

Optionally, if the PCF receives the TA list from the NWDA, the context setup response message further includes the TA list.

S209. The AMF sends a registration accept message to the UE. The registration accept message is used to notify that the UE successfully registers with the 5G network. The registration accept message includes the TA list. The TA list may be received by the AMF from the NWDA through the PCF, or may be generated by the AMF for the UE. The TA list is used to notify a current moving range of the UE in the registered network. If the UE moves within the range of the TA list, the UE does not need to re-initiate registration, or if the UE moves outside the range of the TA list, the UE needs to re-initiate network registration and obtain a new TA list.

S210. When an UPF receives downlink data, the UPF sends a downlink data notification to an SMF. The downlink data notification is used to notify that there is downlink data to be sent to the terminal.

Optionally, when the UPF determines that a downlink data channel of the UE is disconnected, the UPF sends the downlink data notification (Downlink Date notification, DDN) to the SMF, where the downlink data notification carries user identity information.

S211. The SMF forwards the downlink data notification to the AMF.

S212. The AMF sends a paging message to the terminal in idle mode within the paging area.

Optionally, the AMF may determine the access network device list based on the paging area, and send a paging request to each access network device included in the access network device list, where the paging request includes a first cell list or a second cell list, the first cell list includes all cells within the paging area, and the second cell list is included in the first cell list and is managed by a corresponding access network device.

In an optional manner, the AMF may determine, based on the cells included in the cell list, base stations related to the cell list, and send the paging message to all the related base stations. The paging message includes the cell list. For example, the cell list includes cells with IDs 1, 5, 9, and 11; the AMF determines that the cells with the IDs 1 and 5 are managed by a base station A, the cell with the ID 9 is managed by a base station B, and the cell with the ID 11 is managed by to a base station C, and the AMF separately sends the paging message to the base stations A, B, and C. The paging message includes the received cell list, where the cell list includes all the cells with the IDs 1, 5, 9, and 11.

In another optional manner, the AMF may determine, based on the cells included in the cell list, base stations related to the cell list, and send a paging request to each base station, where the paging request carries a subset of the cell list, and a cell in the subset is managed only by the base station. For example, the cell list includes cells with IDs 1, 5, 9, and 11; the AMF determines that the cells with the IDs 1 and 5 are managed by a base station A, the cell with the ID 9 belongs to a base station B, and the cell with the ID 11 is managed by to the base station C; and the AMF sends a paging request to the base station A, where the paging request includes the cell IDs 1 and 5, the AMF sends a paging request to the base station B, where the paging request includes the cell ID 9, and the AMF sends a paging request to the base station C, where the paging request includes the cell ID 11.

Optionally, the AMF may further determine, based on the TA list, base stations related to the TA list, and send the paging message to all the base stations in the TA list. The paging message includes the cell list received from the PCF. For example, the TA list includes base stations A, B, C, D, E, F, and G, and the cell list includes cells with IDs 1, 5, 9, and 11. The AMF may send the paging message to all the base stations A, B, C, D, E, F, and G, where the paging message includes the cells with the IDs 1, 5, 9, and 11.

Optionally, before sending the paging message to the terminal in idle mode within the paging area, the AMF may first receive the activation condition of the paging area that is sent by the PCF. Then, when the activation condition is met, the AMF sends the paging message to the terminal in idle mode within the paging area. Therefore, the AMF may use different cell lists for different users or a same user in different scenarios based on service types, time periods, locations, and the like, to adaptively determine a paging range, and further keep a balance between a one-paging hit ratio and the paging range, so as to obtain a highest paging hit ratio in a minimum range.

S213. If the terminal in idle mode is not reached through paging within the paging area, the AMF sends the paging request to the terminal in idle mode within the registration area.

Optionally, when the AMF receives no paging response message that is sent by the UE from any cell within the paging area, the AMF determines that the terminal in idle mode is not reached through paging within the paging area, and further the AMF re-pages the UE in all cells served by all base stations in the TA list.

Optionally, the AMF may determine the access network device list based on the TA list, and send the paging request to each access network device included in the access network device list, where a cell included in the paging area is managed by the access network device included in the access network device list, and the paging request includes the TA list.

Optionally, the paging area used in this embodiment of this application may be the cell list, or may be the access network device list (for example, a 5Gbase station list). After obtaining the 5G base station list, the AMF may preferably send the paging request to base stations included in the obtained 5G base station list. If the UE is not reached through paging in all cells served by the base stations included in the obtained 5G base station list, the AMF re-pages the UE in all the cells served by all the base stations in the TA list.

S214 to S218 are a paging area update method provided in this embodiment of this application. After the AMF determines that the cell list of the UE is incorrect, the AMF may disable the cell list of the UE. If the UE still needs to be paged, the AMF directly pages the UE in a paging range of the TA list, thereby avoiding performing paging still in the incorrect cell list. This reduces time spent on paging. Alternatively, the AMF may update the cell list, and preferably page the UE by using a new cell list, thereby ensuring paging accuracy of the cell list.

S214. The AMF determines whether the paging area is correct.

In specific implementation, if the terminal is not reached through paging within the paging area, the AMF determines that the paging area is incorrect. Optionally, if receiving signaling or data sent by the terminal from an area other than the paging area, the AMF determines that the paging area is incorrect. For example, the UE sends a paging response message to a base station; the base station forwards, to the AMF, the paging response message sent by the UE, where the paging response message carries an identity of a cell in which the UE is currently located; and if the AMF determines, based on the carried cell identity, that the cell corresponding to the cell identity does not belong to the cell list, the AMF determines that the paging area is incorrect.

Optionally, when the AMF determines that the paging area is incorrect, the AMF may disable the cell list. When the AMF receives the DDN of the UE sent by the SMF, the AMF directly pages the UE in the TA list, instead of paging the UE within the cell list. Alternatively, the AMF may update the cell list, and add, to the existing cell list, a cell in which the UE sends the paging response, to continue to page the UE. The AMF may update the paging area in the following manner.

S215. If determining that the paging area is incorrect, the AMF sends a paging area update request to the PCF.

The paging area update request is used to instruct the PCF to obtain an updated cell list from the NWDA. The paging area update request carries a cause value for requesting to update a context of the UE and/or information indicating that the cell list is incorrect.

S216. The PCF forwards the paging area update request to the NWDA. The paging area update request carries the cause value of a cell list update request message and/or the information indicating that the cell list is incorrect.

S217. The NWDA sends an update response message to the PCF. The update response message carries the updated cell list, and the update response message may further carry an updated TA list.

In specific implementation, before sending the update response message, the NWDA needs to determine to adjust the cell list of the UE based on the received cause value of the cell list update request message and/or the information indicating that the cell list is incorrect, a current time, a location or network location of the UE, information of a being executed service, and the like. Certainly, the NWDA needs to learn of the foregoing required information. The NWDA may subscribe to the information from the UE or another network device, or the AMF or the PCF reports the information to the NWDA in S215 and S216.

S218. The PCF sends the update response message to the AMF. The update response message carries the updated cell list, and the update response message may further carry the updated TA list.

Optionally, if the AMF receives the updated TA list, the AMF needs to send a non-access stratum NAS message to the UE, where the non-access stratum NAS message carries the updated TA list.

The foregoing describes in detail the method in the embodiments of this application. The following provides an apparatus in the embodiments of this application.

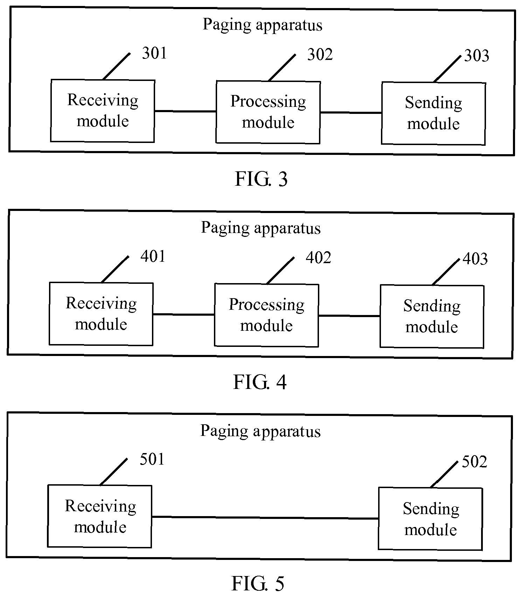

FIG. 3 is a schematic structural diagram of a paging apparatus according to an embodiment of this application. The paging apparatus may be an access and mobility management network element AMF, including a receiving module 301, a processing module 302, and a sending module 303. Detailed descriptions of the units are as follows.

The receiving module 301 is configured to obtain a paging area of a terminal, determined by a network data analytics network element, where the paging area is smaller than a registration area of the terminal.

The receiving module 301 is further configured to receive a downlink data notification sent by a session management network element, where the downlink data notification is used to notify that there is downlink data to be sent to the terminal.

The sending module 303 is configured to send a paging message to the terminal in idle mode within the paging area.

It should be noted that, for implementations of the modules, correspondingly refer to corresponding descriptions of the method embodiment shown in FIG. 2A and FIG. 2B, and the modules execute the methods and functions executed by the access and mobility management network element AMF in the foregoing embodiment.

FIG. 4 is a schematic structural diagram of a paging apparatus according to an embodiment of this application. The paging apparatus may be a network data analytics network element, including a receiving module 401, a processing module 402, and a sending module 403. Detailed descriptions of the modules are as follows.

The processing module 402 is configured to determine a paging area of a terminal, where the paging area is smaller than a registration area of the terminal.

The sending module 403 is configured to send the paging area to an access and mobility management network element, where the paging area is used by the access and mobility management network element to send a paging message to the terminal in idle mode within the paging area.

It should be noted that, for implementations of the modules, correspondingly refer to corresponding descriptions of the method embodiment shown in FIG. 2A and FIG. 2B, and the modules execute the methods and functions executed by the network data analytics network element in the foregoing embodiment.

FIG. 5 is a schematic structural diagram of a paging apparatus according to an embodiment of this application. The paging apparatus may be an access network (AN) device, including a receiving module 501 and a sending module 502. Detailed descriptions of the modules are as follows.

The receiving module 501 is configured to receive a paging request sent by an access and mobility management network element, where the paging request includes a paging area.

The sending module 502 is configured to send a paging message to a terminal in idle mode within the paging area.

It should be noted that, for implementations of the modules, correspondingly refer to corresponding descriptions of the method embodiment shown in FIG. 2A and FIG. 2B, and the modules execute the methods and functions executed by the access network (AN) device in the foregoing embodiment.

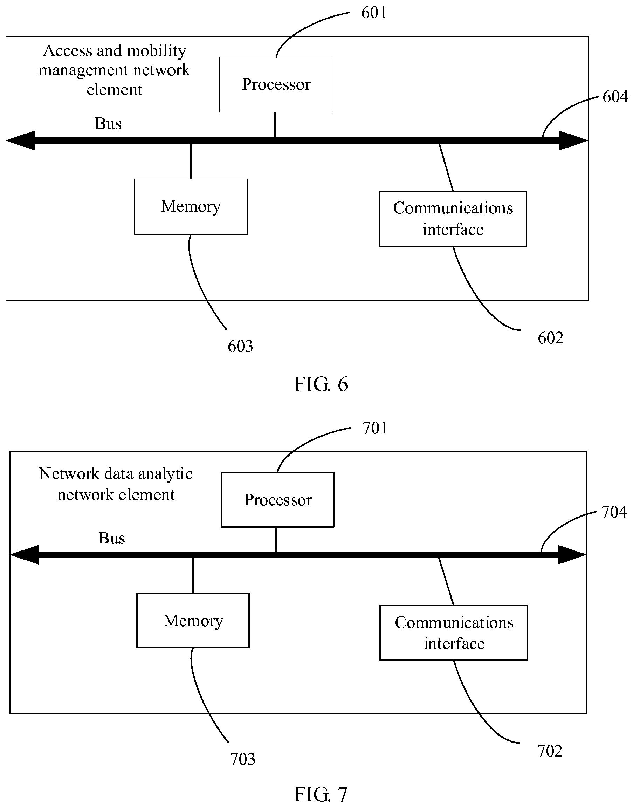

FIG. 6 is a schematic structural diagram of an access and mobility management network element according to this application. As shown in the diagram, the network element may include at least one processor 601 such as a CPU, at least one communications interface 602, at least one memory 603, and at least one communications bus 604. The communications bus 604 is configured to implement connection communication between these components. The communications interface 602 of the device in this embodiment of this application is configured to perform signaling or data communication with another node device. The memory 603 may be a high-speed RAM memory, or may be a non-volatile memory (non-volatile memory), for example, at least one magnetic disk memory. Optionally, the memory 603 may be at least one storage apparatus located far away from the processor 601. The memory 603 stores a group of program code, and the processor 601 executes a program, in the memory 603, executed by the wireless access network node.

The communications interface 602 is configured to: obtain a paging area of a terminal, determined by a network data analytics network element, where the paging area is smaller than a registration area of the terminal; receive a downlink data notification sent by a session management network element, where the downlink data notification is used to notify that there is downlink data to be sent to the terminal; and send a paging message to the terminal in idle mode within the paging area.

Optionally, the communications interface 602 is further configured to: obtain an activation condition of the paging area; and when the activation condition is met, send, for the access and mobility management network element, the paging message to the terminal in idle mode within the paging area.

Optionally, the communications interface 602 is further configured to: determine an access network device list based on the paging area, and send a paging request to each access network device included in the access network device list, where the paging request includes a first cell list or a second cell list, the first cell list includes all cells within the paging area, and the second cell list is included in the first cell list and is managed by a corresponding access network device.

Optionally, the communications interface 602 is further configured to: receive a registration message sent by the terminal; send a request message to the network data analytics network element; and receive a response message returned by the network data analytics network element, where the response message includes the paging area.

Optionally, the processor 601 is configured to determine whether the paging area is correct; and if determining that the paging area is incorrect, disable the paging area or update the paging area.

Optionally, the processor 601 is specifically configured to: if the terminal is not reached through paging within the paging area, determine that the paging area is incorrect; or if receiving signaling or data sent by the terminal from an area other than the paging area, determine that the paging area is incorrect.

Optionally, the communications interface 602 is further configured to send a paging area update request to the network data analytics network element, where the paging area update request is used to request the network data analytics network element to update the paging area; receive an updated paging area sent by the network data analytics network element; and send a paging message to the terminal in idle mode within the updated paging area.

Further, the processor may further perform, by coordinating with the memory and the communications interface, operations performed by the access and mobility management network element in the foregoing application embodiment.

FIG. 7 is a schematic structural diagram of a network data analytics network element according to this application. As shown in the diagram, the network element may include at least one processor 701 such as a CPU, at least one communications interface 702, at least one memory 703, and at least one communications bus 704. The communications bus 704 is configured to implement connection communication between these components. The communications interface 702 of the device in this embodiment of this application is configured to perform signaling or data communication with another node device. The memory 703 may be a high-speed RAM memory, or may be a non-volatile memory (non-volatile memory), for example, at least one magnetic disk memory. Optionally, the memory 703 may be at least one storage apparatus located far away from the processor 701. The memory 703 stores a group of program code, and the processor 701 executes a program, in the memory 703, executed by the wireless access network node.

The processor 701 is configured to determine a paging area of a terminal, where the paging area is smaller than a registration area of the terminal.

The communications interface 702 is configured to send the paging area to the access and mobility management network element, where the paging area is used by the access and mobility management network element to send a paging message to the terminal in idle mode within the paging area.

Optionally, the communications interface 702 is further configured to send an activation condition of the paging area to the access and mobility management network element, where the activation condition is used to instruct the access and mobility management network element to send the paging message to the terminal in idle mode within the paging area when the activation condition is met.

Optionally, the communications interface 702 is further configured to receive a request message sent by the access and mobility management network element; and a transmitter 705 is further configured to send a response message to the access and mobility management network element, where the response message includes the paging area.

Optionally, the communications interface 702 is further configured to receive a paging area update request sent by the access and mobility management network element; the processor 701 is further configured to update the paging area; and the communications interface 702 is further configured to send an updated paging area to the access and mobility management network element.

Further, the processor may further perform, by coordinating with the memory and the communications interface, operations performed by the access and mobility management network element in the foregoing application embodiment.

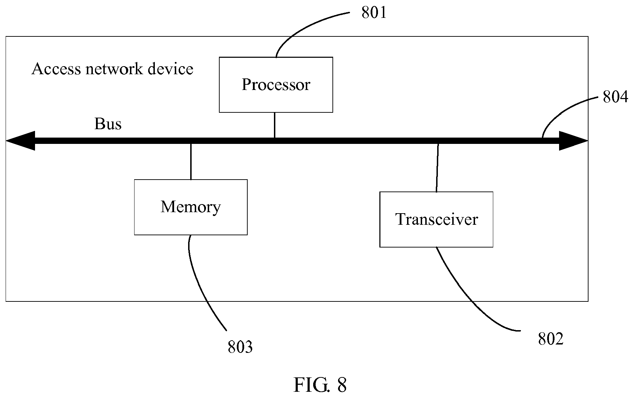

FIG. 8 is a schematic structural diagram of an access network device according to this application. As shown in the diagram, the device may include at least one processor 801 such as a CPU, at least one transceiver 802, at least one memory 803, and at least one communications bus 804. The communications bus 804 is configured to implement connection communication between these components. The communications interface 802 of the device in this embodiment of this application is configured to perform signaling or data communication with another node device. The memory 803 may be a high-speed RAM memory, or may be a non-volatile memory (non-volatile memory), for example, at least one magnetic disk memory. Optionally, the memory 803 may be at least one storage apparatus located far away from the processor 801. The memory 803 stores a group of program code, and the processor 801 executes a program, in the memory 803, executed by the wireless access network node.

The transceiver 802 is configured to receive a paging request sent by an access and mobility management network element, where the paging request includes a paging area; and send a paging message to a terminal in idle mode within the paging area.

Optionally, the transceiver 802 is further configured to send the paging message to the terminal within an intersection cell shared by the paging area and a cell included by the access network device.

Further, the processor may further perform, by coordinating with the memory and the communications interface, operations performed by the access network device in the foregoing application embodiment.

A person of ordinary skill in the art may understand that all or some of the processes of the methods in the embodiments may be implemented by a computer program instructing related hardware. The program may be stored in a computer-readable storage medium. When the program runs, the processes of the methods in the embodiments are performed. The foregoing storage medium includes any medium that can store program code, such as a ROM, a random access memory RAM, a magnetic disk, or an optical disc.

## Claims

1. A paging method, comprising:
obtaining, by an access and mobility management network element, a paging area of a terminal, determined by a network data analytics network element, wherein the paging area is smaller than a registration area of the terminal;
receiving, by the access and mobility management network element, a downlink data notification sent from a session management network element, wherein the downlink data notification is used to notify that there is downlink data to be sent to the terminal; and
sending, by the access and mobility management network element, a paging message to the terminal in idle mode within the paging area.

2. The method according to claim 1, wherein the method further comprises:
obtaining, by the access and mobility management network element, an activation condition of the paging area; and
the sending, by the access and mobility management network element, a paging message to the terminal in idle mode within the paging area comprises:
when the activation condition is met, sending, by the access and mobility management network element, the paging message to the terminal in idle mode within the paging area.

3. The method according to claim 1 or 2, wherein the paging area comprises at least one of: a cell list and an access network device list.

4. The method according to any one of claims 1 to 3, wherein the sending, by the access and mobility management network element, a paging message to the terminal in idle mode within the paging area comprises:
determining, by the access and mobility management network element, the access network device list based on the paging area, and sending a paging request to each access network device comprised in the access network device list, wherein the paging request comprises a first cell list or a second cell list, the first cell list comprises all cells within the paging area, and the second cell list is comprised in the first cell list and is managed by a corresponding access network device.

5. The method according to any one of claims 1 to 4, wherein the obtaining, by an access and mobility management network element, a paging area of a terminal, determined by a network data analytics network element comprises:
receiving, by the access and mobility management network element, a registration message sent by from the terminal;
sending, by the access and mobility management network element, a request message to the network data analytics network element; and
receiving, by the access and mobility management network element, a response message returned by the network data analytics network element, wherein the response message comprises the paging area.

6. The method according to claim 5, wherein the response message further comprises the registration area.

7. The method according to any one of claims 1 to 6, wherein after the sending, by the access and mobility management network element, a paging message to the terminal in idle mode within the paging area, the method further comprises:
determining, by the access and mobility management network element, whether the paging area is correct; and
if determining that the paging area is incorrect, disabling, by the access and mobility management network element, the paging area or updating the paging area.

8. The method according to claim 7, wherein the determining, by the access and mobility management network element, whether the paging area is correct comprises:
if the terminal is not reached through paging within the paging area, determining, by the access and mobility management network element, that the paging area is incorrect; or
if receiving signaling or data sent by the terminal from an area other than the paging area, determining, by the access and mobility management network element, that the paging area is incorrect.

9. The method according to any one of claims 1 to 8, wherein the method further comprises:
sending, by the access and mobility management network element, a paging area update request to the network data analytics network element, wherein the paging area update request is used to request the network data analytics network element to update the paging area;
receiving, by the access and mobility management network element, an updated paging area sent by the network data analytics network element; and
sending, by the access and mobility management network element, a paging message to the terminal in idle mode within the updated paging area.

10. A paging method, comprising:
determining, by a network data analytics network element, a paging area of a terminal, wherein the paging area is smaller than a registration area of the terminal; and
sending, by the network data analytics network element, the paging area to the access and mobility management network element, wherein the paging area is used by the access and mobility management network element to send a paging message to the terminal in idle mode within the paging area.

11. The method according to claim 10, wherein the method further comprises:
sending, by the network data analytics network element, an activation condition of the paging area to the access and mobility management network element, wherein the activation condition is used to instruct the access and mobility management network element to send the paging message to the terminal in idle mode within the paging area when the activation condition is met.

12. The method according to claim 10, wherein the sending, by the network data analytics network element, the paging area to the access and mobility management network element comprises:
receiving, by the network data analytics network element, a request message sent from the access and mobility management network element; and
sending, by the network data analytics network element, a response message to the access and mobility management network element, wherein the response message comprises the paging area.

13. The method according to claim 12, wherein the response message further comprises the registration area.

14. The method according to any one of claims 10 to 13, wherein the method further comprises:
receiving, by the network data analytics network element, a paging area update request sent from the access and mobility management network element;
updating, by the network data analytics network element, the paging area; and
sending, by the network data analytics network element, an updated paging area to the access and mobility management network element.

15. A paging method, comprising:
receiving, by an access network device, a paging request sent by an access and mobility management network element, wherein the paging request comprises a paging area; and
sending, by the access network device, a paging message to a terminal in idle mode within the paging area.

16. The method according to claim 15, wherein the sending, by the access network device, a paging message to a terminal in idle mode within the paging area comprises:
sending, by the access network device, the paging message to the terminal within an intersection cell shared by the paging area and a cell managed by the access network device.

17. An access and mobility management network element, comprising:
a communications interface, configured to: obtain a paging area of a terminal, determined by a network data analytics network element, wherein the paging area is smaller than a registration area of the terminal; receive a downlink data notification sent by a session management network element, wherein the downlink data notification is used to notify that there is downlink data to be sent to the terminal; and send a paging message to the terminal in idle mode within the paging area.

18. The access and mobility management network element according to claim 17, wherein
the communications interface is further configured to: obtain an activation condition of the paging area; and when the activation condition is met, send, for the access and mobility management network element, the paging message to the terminal in idle mode within the paging area.

19. The access and mobility management network element according to claim 17 or 18, wherein the paging area comprises at least one of a cell list and an access network device list.

20. The access and mobility management network element according to any one of claims 17 to 19, wherein
the communications interface is further configured to: determine the access network device list based on the paging area, and send a paging request to each access network device comprised in the access network device list, wherein the paging request comprises a first cell list or a second cell list, the first cell list comprises all cells within the paging area, and the second cell list is comprised in the first cell list and is managed by a corresponding access network device.

21. The access and mobility management network element according to any one of claims 17 to 20, wherein
the communications interface is further configured to: receive a registration message sent by the terminal; send a request message to the network data analytics network element; and receive a response message returned by the network data analytics network element, wherein the response message comprises the paging area.

22. The access and mobility management network element according to claim 21, wherein the response message further comprises the registration area.

23. The access and mobility management network element according to any one of claims 17 to 22, wherein the access and mobility management network element further comprises:
a processor, configured to determine whether the paging area is correct; and if determining that the paging area is incorrect, disable the paging area or update the paging area.

24. The access and mobility management network element according to claim 23, wherein the processor is specifically configured to:
if the terminal is not reached through paging within the paging area, determine that the paging area is incorrect; or
if receiving signaling or data sent by the terminal from an area other than the paging area, determine that the paging area is incorrect.

25. The access and mobility management network element according to any one of claims 17 to 24, wherein
the communications interface is further configured to send: a paging area update request to the network data analytics network element, wherein the paging area update request is used to request the network data analytics network element to update the paging area; receive an updated paging area sent by the network data analytics network element; and send a paging message to the terminal in idle mode within the updated paging area.

26. A network data analytics network element, comprising:
a processor, configured to determine a paging area of a terminal, wherein the paging area is smaller than a registration area of the terminal; and
a communications interface, configured to send the paging area to the access and mobility management network element, wherein the paging area is used by the access and mobility management network element to send a paging message to the terminal in idle mode within the paging area.

27. The network data analytics network element according to claim 26, wherein
the communications interface is further configured to send an activation condition of the paging area to the access and mobility management network element, wherein the activation condition is used to instruct the access and mobility management network element to send the paging message to the terminal in idle mode within the paging area when the activation condition is met.

28. The network data analytics network element according to claim 25, wherein the network data analytics network element further comprises:
the communications interface, further configured to: receive a request message sent by the access and mobility management network element; and send a response message to the access and mobility management network element, wherein the response message comprises the paging area.

29. The network data analytics network element according to claim 28, wherein the response message further comprises the registration area.

30. The network data analytics network element according to any one of claims 26 to 29, wherein
the communications interface is further configured to receive a paging area update request sent by the access and mobility management network element;
the processor is further configured to update the paging area; and
the communications interface is further configured to send an updated paging area to the access and mobility management network element.

31. An access network device, comprising:
a transceiver, configured to: receive a paging request sent by an access and mobility management network element, wherein the paging request comprises a paging area; and send a paging message to a terminal in idle mode within the paging area.

32. The access network device according to claim 31, wherein the transceiver is further configured to send the paging message to the terminal within an intersection cell shared by the paging area and a cell managed by the access network device.
